# EUROPEAN PATENT APPLICATION

(11) **EP 1 450 328 A2**
(43) Date of publication of application: **25.08.2004**
(21) Application number: 04075495.4
(22) Date of filing: 17.02.2004
(51) Int. Cl.: G08C 19/00

(54) **System for remote monitoring of centrifugal machines**

(30) Priority: 21.02.2003 IT MI20030313
(71) Applicant: TM.P. S.p.A. Termomeccanica Pompe, 19126 La Spezia (IT)
(72) Inventor: Garibotti, Edoardo, 19020 Sesta Godano (La Spezia) (IT)
(74) Representative: Coppo, Alessandro

(57) **Abstract**

System for remote monitoring of a centrifugal machine comprising an electronic local processing unit suitable for acquiring values of a plurality of parameters relative to the operating status of said machine and an electronic central processing unit connected to said at least one local unit through a telecommunications network which receives pre-processed data relative to the acquired parameters.

## Description

The present invention concerns a system for remote monitoring of centrifugal machines.

In particular, the present invention refers to a system for remote monitoring of centrifugal machines which supports the management of the maintenance of such machines and of the users that use it.

As is known, centrifugal machines are, for example, pumps, compressors, turbines, etc. In particular, a pump is a centrifugal machine which can be actuated by an electric motor and comprises one or more pumping stages of a fluid.

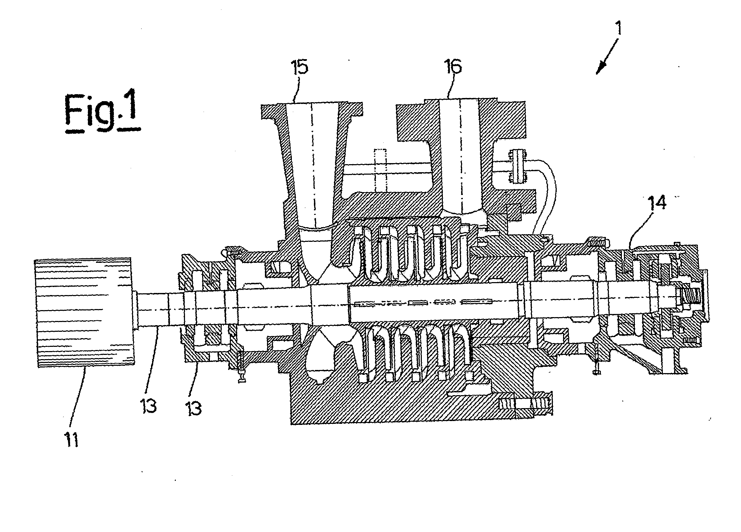

Figure 1 illustrates, as an example, a multi-stage pump 1 comprising an electric motor 11, for actuating the pump fitted onto a rotation shaft 12 of the pump itself. The rotation of such a shaft is permitted by the presence of a first group of bearings 13 and a second group of bearings 14 arranged at opposite ends of said pump.

Also illustrated are a fluid intake duct 15 and a fluid delivery duct 16. In the pump illustrated in figure 1, to check correct operation the following parameters can be monitored:
- number of revolutions of the electric motor;
- electric power of the motor;
- temperature and vibrations of the first group of bearings;
- temperature and vibrations of the second group of bearings;
- intake pressure;
- delivery pressure;
- overall operating time of the pump.

According to the prior art such parameters are normally monitored through an indicator panel arranged near to the machine, provided with indicators of the various parameters, light and/or sound indicators. Moreover, such monitoring is carried out through a local processing unit associated with such an indicator panel.

The Applicant has observed that the detection of anomalies is carried out exclusively in said local unit, and therefore the personnel responsible for the maintenance of a centrifugal machine must acquire information from the location of such a machine, directly from said local unit.

Moreover, the processing that can be carried out on the detected data is limited by the calculation capacity possessed by the local units.

The Applicant has realised a system for remote monitoring of centrifugal machines in which the information on the state of the machine and the indication of anomalies and failure in the machine can be detected by multiple local electronic units connected to a telecommunications network. Moreover, the parameters detected on the machine are sent into a central processing calculation unit provided with an expert system suitable for realising complex processing of such parameters, which allow possible anomalous situations to be diagnosed and predicted, and allow programmed and extraordinary maintenance interventions of the machine to be monitored.

An aspect of the present invention concerns a system for remote monitoring of centrifugal machines comprising at least one local electronic processing unit suitable for acquiring values of a plurality of parameters relative to the operating state of said machine, characterised in that it comprises at least one electronic central processing unit connected to said at least one local unit through a telecommunications network which receives pre-processed data relative to the acquired parameters, and it is suitable for further processing said data through a diagnostic program and for making the results of the processing available to a plurality of electronic user stations connected to said central unit through said telecommunications network.

The characteristics and advantages of the system according to the present invention shall become clearer from the following description, given as an example and not for limiting purposes, of an embodiment with reference to the attached figures in which:
- figure 1 represents a schematic view of a multi-stage pump to which the monitoring system according to the present invention can be applied;
- figure 2 is an example of a block diagram of the monitoring system according to the present invention.

With reference to the quoted figures the system for remote monitoring of centrifugal machines comprises an electronic local processing unit 2 associated with a centrifugal machine 1 which carries out a acquiring of operating parameters of said machine and a subsequent processing of said parameters, for example in order to establish which of them have significant characteristics for the operation of the machine. Said local processing unit preferably comprises a GSM modem interface 21.

Moreover, the monitoring system according to the present invention comprises an electronic central processing unit 3 connected through a telecommunications network to said local unit. Examples of telecommunications networks can be a dedicated LAN network, Internet, a dedicated wireless connection between said local unit and said central unit.

According to the present invention said central unit can be connected to a plurality of local units, in which each unit controls a centrifugal machine, since said central unit is able to recognise the data which is sent by one local unit from the data which is sent by another local unit.

The system also comprises a plurality of electronic user stations U1, Un and T1, Tm, connected to said central unit through which it is possible to access the data transmitted by said local unit and to visualise the data itself processed by said central and/or local units.

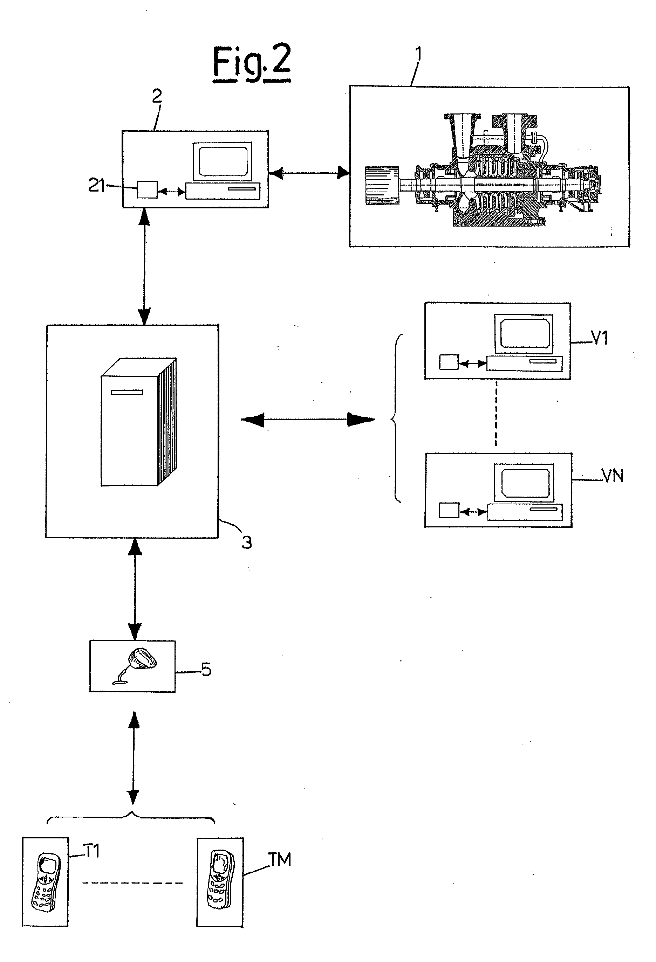

In figure 2 two types of user stations, personal computers U1, Un and cellular phones T1, Tm, are represented as an example. In an equivalent manner, other types of units suitable for connecting to the Internet telecommunications network can be used.

Said central processing unit preferably comprises a management database of the information which is received by the local units and a processing program which carries out a diagnostic of each of the centrifugal machines the parameters of which have been acquired by said local units.

The connection between said central unit and the user stations is typically carried out through the Internet.

According to the present invention on said central processing unit (server) a website is implemented in which a synoptic indication panel can be visualised in which the data sent by the local units for each machine monitored is visualised and from which a registered user, provided authorisation, through one of the user stations, can connect and at least partially access the information transmitted by said local units.

Said central processing unit is constantly connected to the Internet telecommunications network and communicates with all of said local units constantly.

The data exchanged between said central processing unit and the local units is preferably in digital format according to the aforementioned TCP/IP communications protocol and is advantageously encoded through a cryptographic program, for security reasons.

In such a way a user can detect information on the state of the machine without the need to be at its location. Moreover, such data can be processed by said central unit so as to carry out the aforementioned diagnostic operation, and the user can in this case check more specific information on the state of the machine with respect to the simple values of the measured parameters.

As stated above, each local unit associated with a centrifugal machine acquires parameters from it and carries out pre-processing before sending them to said central unit.

The acquisition step is preferably an active acquisition step, i.e. the values of the detected parameters are compared with the predetermined threshold acquisition values, which can in turn be modified according to requirements. In this case, the deviation of the detected values with respect to the acquisition thresholds can only be sent to the central processing unit if such deviations assume significant values. In such a way, it is avoided using large amounts of memory to memorise values of insignificant acquired values.

Moreover, the acquired parameters are compared with alarm thresholds. When the value of a parameter exceeds its corresponding threshold alarm value the local unit processes an alarm procedure. Such a procedure comprises sending, through the connection with said telecommunications network and through said central unit, messages to at least one of said users connected to the system through said user stations. In particular, in the case in which the user station is a cellular phone a short message (SMS) can be sent, in the case in which the user station is a personal computer an email message can be sent on said computer.

In the example of a centrifugal machine of figure 1, the following parameters are acquired:
- number of revolutions of the electric motor;
- electric power of the motor;
- temperature and vibrations of the first group of bearings;
- temperature and vibrations of the second group of bearings;
- intake pressure;
- delivery pressure;
- overall operating time of the pump.

The parameters of the machines pre-processed by each local unit are then sent to said central unit, which memorises them in said database so as to create a file which takes into account all of the processing carried out on the parameters of each machine monitored.

Moreover, said central unit uses "an expert system", i.e. a system able to learn from each processing carried out previously, which applies said processing program.

The diagnostic analysis carried out is visualised on said website so that each enabled user can check the operating status of the machines and the chronology of the ordinary and/or extraordinary maintenance to be carried out on the machines.

Moreover, the processing program can, furthermore, advantageously carry out a statistical calculation of the data memorised in the database, for example through a calculation of averages or of standard deviation.

The system according to the present invention allows the most expensive idle times to be reduced and in general reduces the maintenance cost, thanks to the predictive analysis of possible anomalies, which allows predictive maintenance to be carried out on the machine. Moreover, the system allows the performance of machines to be optimised increasing the production capacity of the factory which uses them and the electrical energy consumption to be reduced allowing them to always work in optimal operating conditions.

## Claims

1. System for remote monitoring of a centrifugal machine comprising:
- at least one electronic local processing unit suitable for acquiring values of a plurality of parameters relative to the operating status of said machine,
**characterised in that** it comprises
- at least one electronic central processing unit connected to said at least one local unit through a telecommunications network which receives pre-processed data relative to the acquired parameters, and it is suitable for further processing said data through a diagnostic program and for making the results of the processing available to a plurality of electronic user stations connected to said central unit through said telecommunications network.

2. System according to claim 1, wherein said telecommunications network is the Internet.

3. System according to claim 2, wherein a website is implemented on said central unit in which a synoptic indicator panel is visualised for each machine in which the data pre-processed by the local units is highlighted and from which a user registered through one of said user stations can connect and at least partially access said pre-processed data.

4. System according to claim 3, wherein said user accesses the results of the processing carried out by said diagnostic program.

5. System according to claim 3, wherein said pre-processing carried out by said local unit comprises the comparison of values of acquired parameters with predetermined acquisition thresholds in order to calculate the deviation of the acquired values from such acquisition thresholds.

6. System according to claim 5, wherein said local unit sends the values of the parameters whose deviation from said acquisition thresholds is greater than a predetermined value to said central unit.

7. System according to claim 3, wherein said pre-processing carried out by said local unit comprises the comparison of values of acquired parameters with predetermined alarm thresholds.

8. System according to claim 7, wherein said local unit sends an alarm message to at least one of said user stations in the case in which at least one of the acquired values exceeds its corresponding alarm threshold.

9. System according to claim 8, wherein said user stations are cellular phones.

10. System according to claim 9, wherein said alarm message is a Short Message System (SMS).

11. System according to claim 8, wherein said user stations are personal computers.

12. System according to claim 9, wherein said alarm message is an email message.
